# EUROPEAN PATENT SPECIFICATION

(11) **EP 0 324 432 B1**
(45) Date of publication and mention of the grant of the patent: **27.07.1994**
(21) Application number: 89100336.0
(22) Date of filing: 10.01.1989
(51) Int. Cl.: C08G 69/16, C08G 69/40

(54) **Process for preparing modified polyamides and polyamides obtainable thereby**
Verfahren zur Herstellung modifizierter Polyamide und so erhaltene Produkte
Procédé de préparation de polyamides modifiés et produits obtenus

(30) Priority: 11.01.1988 IT 1903288
(43) Date of publication of application: 19.07.1989
(73) Proprietor: ENICHEM S.p.A., 20124 Milano (IT)
(72) Inventor: Tonti, Sergio, Dr., I-30173 Venezia Mestre (IT); Furlan, Piero, Dr., I-20068 Peschiera Borromeo Milan (IT); Talamini, Gianpiero, Dr., I-30173 Venezia Mestre (IT); Pernice, Roberto, Dr., I-30170 Venezia Mestre (IT)
(74) Representative: Weinhold, Peter, Dr.

(56) References cited:
- DE-A- 3 521 230
- US-A- 4 022 719
- PATENT ABSTRACTS OF JAPAN, vol. 9, no. 184 (C-294)[1907], 30th July 1985, page83 C 294; & JP-A-60 53 536

## Description

The present invention relates to the preparation of modified polyamides endowed with improved mechanical properties, such as a high impact strength, both at room temperature and at lower temperatures, and good colour indices.

The possibility of preparing modified polyamides endowed with good mechanical properties within short polymerization times by using a functionalized elastomeric prepolymer (which acts as modifier) and a basic catalyst, resulting in block copolymers with polyamide blocks and flexible segment blocks, is already known from the state of the art.

EP-B-88 560, for instance, discloses a process for the preparation of impact-resistant polyamides wherein an omega-lactam is polymerized in the presence of an alkali metal catalyst and the reaction product of (a) a polyfunctional cocatalyst and (b) a polyoxyalkylene amine.

However, the products obtained by this process show an impact resistance which is not completely satisfactory, in particular at low temperatures.

The same holds true for the process disclosed in JP-A-60/53536 (Patent Abstracts of Japan, Vol. 9, no. 184 (C-294) [1907]) wherein an omega-lactam is polymerized under alkaline conditions in the presence of the reaction product between a (lactam blocked) diisocyanate and a polyoxyalkylene polyamine, i.e., a polyurea.

According to the present invention, modified polyamides endowed with a favourable combination of physical properties, namely:
- a high impact resistance both at room temperature (+23°C) and at lower temperatures (e.g., at -30°C);
- a sufficiently high flexural modulus;
- a sufficiently neutral colour, in order not to interfere with possible subsequently applied paints;
can be prepared by means of a process which comprises the polymerization of an omega-lactam in the presence of:
a) a polyisocyanate having its isocyanate groups blocked by an omega-lactam;
b) a polyoxyalkylene amine having an amine functionality lower than three in an amount of from 5 to 30% by weight based on the total amount of the reactants, the ratio of NCO equivalents to NH₂ equivalents being higher than 1,
c) an alkali or alkaline earth metal catalyst;
in a certain manner which is specified hereinbelow.

The polyoxyalkylene amines employed according to the present invention have an amine functionality of less than 3, and preferably from 1.5 to 2.9; such polyoxyalkylene amines can be prepared according to known methods, e.g. by amination with ammonia of the corresponding hydroxy-polyethers, and they are also commercially available.

Particularly preferred are polyoxypropylene diamines and polyoxytetramethylene diamines, and still more preferred are the polyoxypropylene diamines having a molecular weight of from about 200 to about 5000, particularly about 200 to about 4000, such as, e.g. JEFFAMINE® D 2000 and JEFFAMINE® D 4000. Also suitable for the purposes of the invention are the polyoxypropylene amines having an amine functionality of about 2.5 and a molecular weight of about 5000, e.g. JEFFAMINE® T 5000. The above commercial products are available from Texaco Chemical Company.

The omega-lactams used in the present invention are preferably selected from the following compounds: γ-butyrolactam, δ-valerolactam, ε-caprolactam, ω-enantholactam, ω-capryllactam, ω-undecanolactam and ω-lauryllactam, either taken individually or in combination, ε-caprolactam and ω-lauryllactam being particularly preferred.

For the anionic polymerization of omega-lactams various types of catalysts are known and used in catalytic amounts, such as lactamates, alkoxides, alkali metal hydrides and alkaline earth metal hydrides; however, sodium, potassium or magnesium bromine lactamates are preferably used, normally dissolved in the omega-lactam. A solution containing 15 - 25 % by weight of sodium or potassium lactamate in omega-lactam is preferred in the process according to the present invention.

The catalyst amount may be from 0.2 to 2 mols per 100 mols of omega-lactam, and preferably from 0.25 to 1.5 mols per 100 mols of omega-lactam.

As activators for the anionic polymerization of the omega-lactam there are used polyisocyanates the isocyanate groups whereof are blocked with omega-lactam (such as e.g. the ones disclosed hereinbelow) and which can be prepared according to known methods.

Substances containing more than one isocyanate group, suitable for the intended purpose, are aliphatic, cycloaliphatic and aromatic di- or polyisocyanates, such as hexamethylene diisocyanate (HDI), trimethyl hexamethylene diisocyanate (TMDI), the trimers of hexamethylene diisocyanate, para-phenylene diisocyanate (PPDI), toluene diisocyanate (TDI), methylene-bis (phenyl isocyanate) (MDI) and its polymers (PMDI); naphthalene diisocyanate (NDI), 1,4-dicyclohexyl diisocyanate (CHDI), 1,4-bis(isocyanatomethyl)-cyclohexane (H₆XDI), isophorone diisocyanate, hydrogenated MDI, 3,3′-dimethyl-4,4′-diphenylene diisocyanate and mixtures thereof.

Preferably, hexamethylene diisocyanate (HDI) is used, (but equivalent results can be obtained with triethyl hexamethylene diisocyanate (TMDI)) in varying amounts, such that the concentration of active NCO groups is from 0.2 to 10 equivalents, preferably from 1 to 7 mols, per 100 mols of omega-lactam.

The concentration of activator to be used is proportional to the amount of polyoxyalkylene amine and is such that the total concentration of the active functions (number of NCO equivalents) is higher than the total concentration of NH₂ groups present in the system.

Thus, the ratio of NCO equivalents to NH₂ equivalents is higher than 1 and preferably from 1.05 to 2.

Depending on the ratio of initiator to modifier, and/or the working conditions employed a copolymer with a structure showing repeating blocks (polyamide-6 and elastomeric segment), or which consists of a mixture of homopolymer and copolymer with alternating repeating segments can be obtained.

When the NCO/NH₂ ratio is higher than 1, an improvement in the physical properties of the resulting polymer usually results.

With a ratio higher than 1.5 an impact resistance may be obtained which is considerably higher than the one of the polyamide homopolymer (with 20 % of JEFFAMINE® D 2000, the value of the notched Izod Resilience is higher than 500 J/m), without any substantial decrease of the flexural modulus (>1000 MPa).

Generally, the products obtained by the process according to the present invention display extremely good colour characteristics, showing a yellowing index, as determined according to ASTM D 1925-70, of not higher than -15.

In the process of the present invention the components of the formulation are admixed with each other, and are melted in order to fill the mold inside which the polymerization is to take place.

The components are preferably distributed inside two melting vessels, one of said melting vessels containing a portion of the omega-lactam and the activator, and the other containing the balance of the omega-lactam and the catalyst.

The polyoxyalkylene amine can be indifferently charged to either one of the vessels, according to the two specific methods for carrying out the process, as described in the following.

According to the first method, the polyisocyanate with blocked isocyanate groups, the omega-lactam and the polyoxyalkylene amine are mixed and melted at a temperature not higher than 110°C, and to the mixture thus obtained, the catalyst in molten omega-lactam is added, whereafter the polymerization temperature is raised up to a value not lower than 120°C.

According to the second method, to the polyisocyanate with blocked polyisocyanate groups, dissolved in molten omega-lactam, a mixture of the polyoxyalkylene amine, the molten omega-lactam and the (alkali) metal catalyst is added at a temperature not higher than 110°C, whereafter the polymerization temperature is raised up to a value not lower than 120°C.

The melting (mixing) temperature may preferably range from 75°C to 110°C.

Both streams leaving the vessels are metered by means of a suitable metering device, are mixed with each other in the desired ratios, and then constitute the feedstock for the mold. The polymerization takes place, inside the same mold, at a temperature from 120 to 250°C, and more preferably from 130°C to 160°C, within a few minutes. If the process is carried out at a temperature lower than the polyamide softening temperature, the formed polymer can be easily removed from the mold, as an already finished article.

The polymerization process can be carried out in the presence of reinforcing agents, such as fiberglass, with fibers of various sizes, fabrics or mineral fillers, which act as inert substances and do not interfere with the polymerization.

The use of fiberglass may prove advantageous if it is desired to increase the rigidity of the manufactured article.

The present formulations are particularly suitable for obtaining a wide variety of manufactured articles, such as flat sheets of different thickness, semifinished articles, solid articles of various shapes, rods, tubes, tanks, miscellaneous articles in general.

In particular, the present formulations are suitable for obtaining flat parts, particularly parts showing a large linear extension, of car bodyworks by casting, by means of the RIM (Reaction Injection Molding) technology, or by rotational molding.

The following examples illustrate the present invention.

### EXAMPLE 1

In a jacketed vessel, heated at 100°C and equipped with stirring means and bottom drain, 223.43 g of caprolactam (CPL), 5.43 g of catalyst [Na-caprolactamate (Na-CPL), 20 % in CPL], and 12.64 g of JEFFAMINE® D 2000 were melted under a nitrogen atmosphere. When the temperature of 100°C was reached, still under nitrogen gas, 8.50 g of activator (caprolactam - blocked hexamethylene-diisocyanate, 33 % in caprolactam) were added to the mixture, and 2 minutes later a flat mold (210x210x3.5 mm), pre-heated at 156°C, was filled therewith.

After 3 minutes and 25 s, the mixture was polymerized and the mold was opened.
A polymer was obtained, the notched Izod impact resistance of which (ASTM D256) at 23°C was 68 J/m, and the flexural modulus (ASTM D790) of which was 2910 MPa (determined on the dry product).

### EXAMPLES 2-6

Example 1 was repeated by replacing JEFFAMINE® D 2000 by the compounds listed in Table 1, which furthermore shows the compositions of the formulations, the polymerization times, and the mechanical characteristics of the obtained polymers.

### EXAMPLES 7-12

By following the procedure of Example 1, polymerizations in the presence of varying amounts of JEFFAMINE® D 2000 were carried out, using Na-caprolactamate (NaCPL, at 20 % in CPL) and K-caprolactamate (K-CPL, 16 % in CPL) as catalyst; hexamethylene diisocyanate (33 % in CPL) was used as the activator.

The formulations, the working conditions and the mechanical characteristics of the resulting polymers are summarized in Table 2.

### EXAMPLES 13-15

Example 1 was repeated, working at a melting and mixing temperature of 90°C and at a polymerization temperature of 150°C; the molar concentrations of Na-caprolactamate (Na-CPL, 20 % in CPL) and of JEFFAMINE® D 2000 were the same, but the concentration of the activator (hexamethylene diisocyanate, 33% in CPL) was varied.

The obtained results are summarized in Table 3.
For Examples 9, 10 and 15, measurements of the yellowing index according to ASTM D 1925-70 were carried out.

The lower the value of the yellowing index, the more "white with a blue shade" the product is. For comparison purposes, polyamide-6 without JEFFAMINE® has a yellowing index of about +6. The corresponding results are given in Table 2 and in Table 3.

### EXAMPLES 16-20

By working according to Example 1, in Examples 16-19 various reaction parameters were changed and in Example 20 trimethyl hexamethylene diisocyanate (TMDI) was used as the activator. The formulations, the polymerization times and the mechanical characteristics of the obtained polymers are summarized in Table 4.

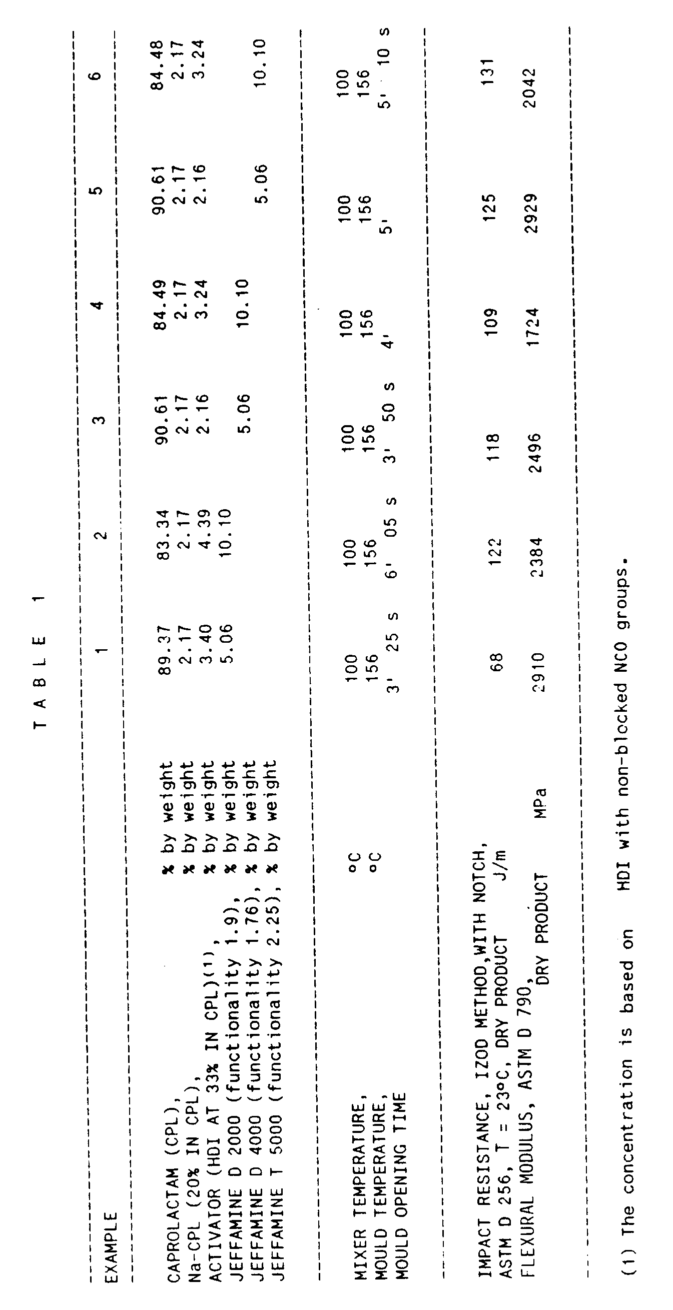

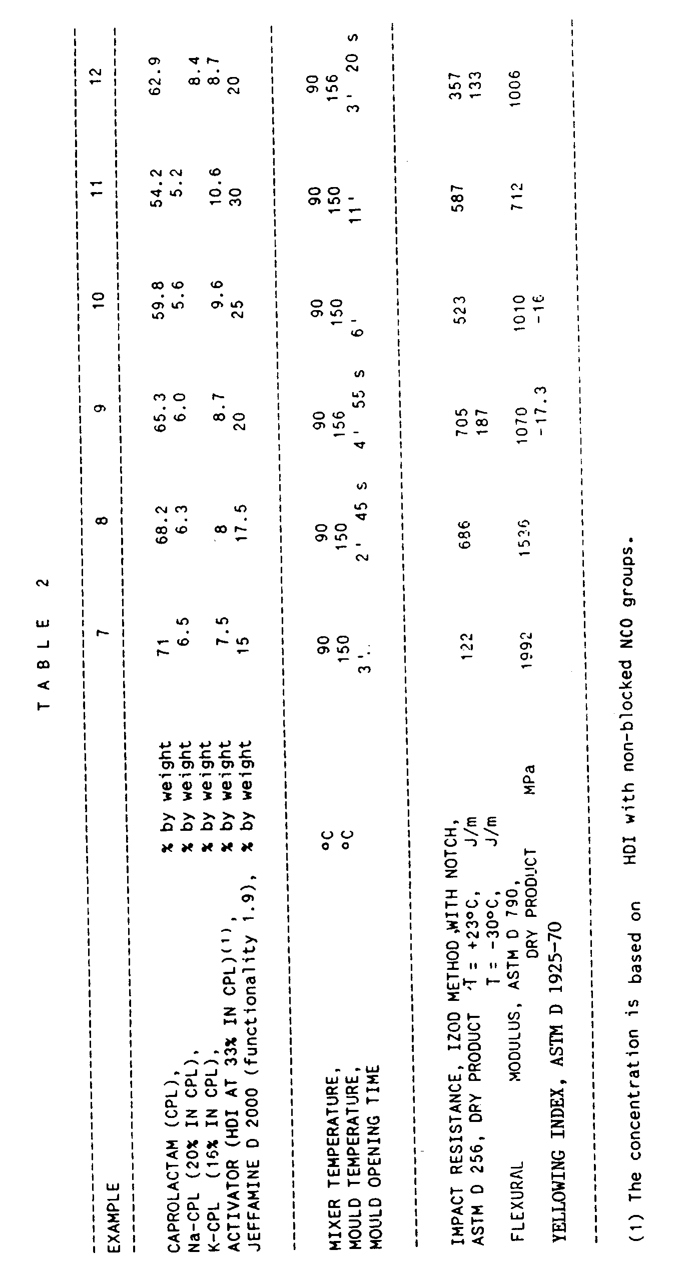

**Table 3**

| | | | |
|---|---|---|---|
| Example | 13 | 14 | 15 |
| CAPROLACTAM (CPL), % by weight | 67.2 | 66.3 | 65.3 |
| Na-CPL (20% IN CPL), % by weight | 6 | 6 | 6 |
| ACTIVATOR (HDI AT 33% IN CPL)⁽¹), % by weight | 6.8 | 7.7 | 8.7 |
| JEFFAMINE D 2000 (functionality 1.9), % by weight | 20 | 20 | 20 |
| MIXER TEMPERATURE, °C | 90 | 90 | 90 |
| MOULD TEMPERATURE, °C | 150 | 150 | 150 |
| MOULD OPENING TIME | 3' 10 s | 3' 05 s | 3' |
| IMPACT RESISTANCE, IZOD METHOD WITH NOTCH, ASTM D 256 DRY PRODUCT +23°C, J/m | 463 | 555 | 727 |
| FLEXURAL MODULUS; ASTM D 790(DRY PRODUCT) MPa | 683 | 1055 | 1083 |
| YELLOWING INDEX; ASTM D 1925-70 | - | - | -15 |

| | | | |
|---|---|---|---|
| (1) See Table 4. | | | |

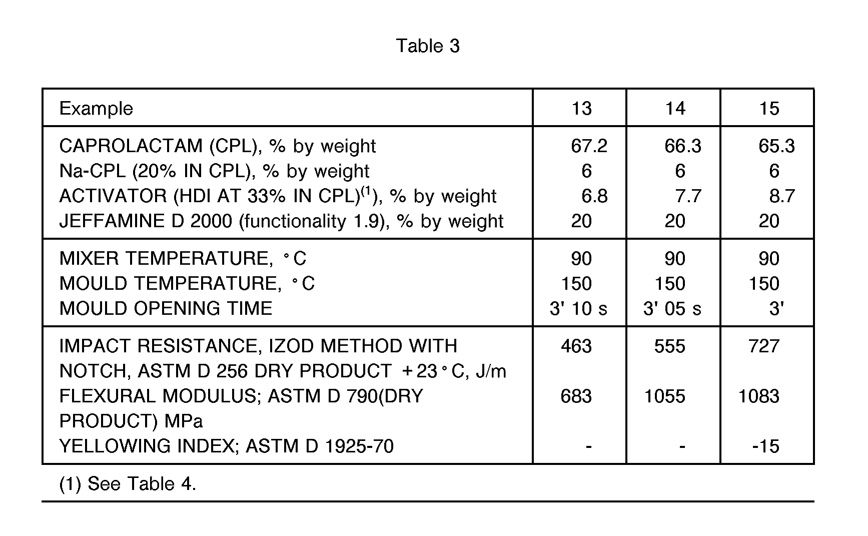

## Claims

1. Process for preparing an impact-resistant polyamide by polymerizing an omega-lactam in the presence of:
i) a polyisocyanate having isocyanate groups blocked with an omega-lactam;
ii) a polyoxyalkylene amine having an amine functionality of less than three in an amount of from 5 to 30% by weight based on the total amount of the reactants, the ratio of NCO equivalents to NH₂ equivalents being higher than 1;
iii) an alkali metal or alkaline earth metal catalyst;
wherein
(a) the polyisocyanate with blocked isocyanate groups, the omega-lactam and the polyoxyalkylene amine are mixed and melted at a temperature of at the most 110°C, and wherein to the resulting mixture the metal catalyst in molten omega-lactam is added whereafter the polymerization temperature is raised to at least 120°C; or
(b) to the polyisocyanate with blocked polyisocyanate groups which is dissolved in molten omega-lactam, a mixture of the polyoxyalkylene amine with the molten omega-lactam and the metal catalyst is added at a temperature of at the most 110°C whereafter the polymerization temperature is raised to at least 120°C.

2. Process according to claim 1, wherein the mixing temperature is from 75° to 100°C and the polymerization temperature ranges form 120° to 250°C.

3. Process according to claim 1 wherein the mixing temperature is from 75° to 100°C and the polymerization temperature ranges from 130° to 160°C.

4. Process according to one or more of claims 1 to 3, wherein said polyoxyalkylene amine is a compound having an amine functionality of from 1.5 to 2.9.

5. Process according to one or more of claims 1 to 4, wherein said polyoxyalkylene amine is a polyoxypropylene diamine or a polyoxytetramethylene diamine.

6. Process according to claim 5 wherein the polyoxypropylene diamine has a molecular weight of from 200 to 5000.

7. Process according to one or more of claims 1 to 6, wherein the omega-lactam is selected from gamma-butyrolactam, delta-valerolactam, epsilon-caprolactam, omega-enantholactam, omega-capryllactam, omega-undecanolactam and omega-lauryllactam, either taken individually or in combination.

8. Process according to one or more of claims 1 to 7, wherein the polyisocyanate is an aliphatic and/or cycloaliphatic and/or aromatic diisocyanate.

9. Process according to claim 8 wherein the polyisocyanate is an aliphatic or cycloaliphatic diisocyanate or is a mixture of an aliphatic diisocyanate and an aromatic diisocyanate.

10. Process according to one or more of claims 1 to 9, wherein the polyisocyanate is hexamethylene diisocyanate (HDI) and/or trimethyl hexamethylene diisocyanate (TMDI).

11. Polyamide, obtainable by the process of any one of claims 1 to 10.

12. Polyamide according to claim 11, having a yellowing index, as determined according to ASTM D 1925-70, of not higher than -15.

## Patentansprüche

1. Verfahren zur Herstellung schlagfester Polyamide durch Polymerisation eines Omega-Laktams in Anwesenheit von:
(i) einem Polyisocyanat mit Isocyanatgruppen, die mit einem Omega-Laktam blockiert sind;
(ii) einem Polyoxyalkylenamin mit einer Amin-Funktionalität von weniger als drei in einer Menge von 5 bis 30 Gew.-%, bezogen auf die Gesamtmenge der Reaktionsteilnehmer, wobei das Verhältnis von NCO-Äquivalenten zu NH₂-Äquivalenten größer als 1 ist;
(iii)einem Alkalimetall- oder Erdalkalimetall-Katalysator;
worin
(a) das Polyisocyanat mit den blockierten Isocyanatgruppen, das Omega-Laktam und das Polyoxyalkylenamin vermischt und bei einer Temperatur von höchstens 110° C geschmolzen werden, und worin zu der erhaltenen Mischung der Metallkatalysator in geschmolzenem Omega-Laktam zugegeben wird, worauf die Polymerisationstemperatur auf wenigstens 120° C angehoben wird; oder
(b) zu dem Polyisocyanat mit den blockierten Polyisocyanatgruppen, das in geschmolzenem Omega-Laktam gelöst ist, eine Mischung des Polyoxyalkylenamins mit dem geschmolzenen Omega-Laktam und dem Metallkatalysator bei einer Temperatur von höchstens 110° C zugegeben wird, worauf die Polymerisationstemperatur auf mindestens 120° C angehoben wird.

2. Verfahren nach Anspruch 1, worin die Mischtemperatur von 75° C bis 100° C und die Polymerisationstemperatur von 120° bis 250° C beträgt.

3. Verfahren nach Anspruch 1, worin die Mischtemperatur von 75° C bis 100° C und die Polymerisationstemperatur von 130° bis 160° C beträgt.

4. Verfahren nach einem oder mehreren der Ansprüche 1 bis 3, worin das genannte Polyoxyalkylenamin eine Verbindung mit einer Amin-Funktionalität von 1,5 bis 2,9 umfaßt.

5. Verfahren nach einem oder mehreren der Ansprüche 1 bis 4, worin das genannte Polyoxyalkylenamin ein Polyoxypropylendiamin oder ein Polyoxytetramethylendiamin ist.

6. Verfahren nach Anspruch 5, worin das Polyoxypropylendiamin ein Molekulargewicht von 200 bis 5.000 aufweist.

7. Verfahren nach einem oder mehreren der Ansprüche 1 bis 6, worin das Omega-Laktam ausgewählt wird aus Gamma-Butyrolaktam, Delta-Valerolaktam, Epsilon-Caprolaktam, Omega-Enantholaktam, Omega-Capryllaktam, Omega-Undecanolaktam und Omega-Lauryllaktam, und entweder jeweils einzeln oder in Kombination verwendet wird.

8. Verfahren nach einem oder mehreren der Ansprüche 1 bis 7, worin das Polyisocyanat ein aliphatisches und/oder cycloaliphatisches und/oder aromatisches Diisocyanat ist.

9. Verfahren nach Anspruch 8, worin das Polyisocyanat ein aliphatisches oder cycloaliphatisches Diisocyanat oder eine Mischung eines aliphatischen Diisocyanats und eines aromatische Diisocyanats ist.

10. Verfahren nach einem der Ansprüche 1 bis 9, worin das Polyisocyanat Hexamethylen-diisocyanat (HDI) und/oder Trimethylhexamethylen-diisocyanat (TMDI) ist.

11. Polyamid, erhältlich mit dem Verfahren nach einem der Ansprüche 1 bis 10.

12. Polyamid nach Anspruch 11 mit einen Vergilbungsindex, der nach ASTM D 1925-70 bestimmt worden ist, von nicht höher als -15.

## Revendications

1. Procédé de préparation d'un polyamide résistant au choc par polymérisation d'un omega-lactame en présence de:
(i) un polyisocyanate renfermant des groupes isocyanates bloqués par un omega-lactame;
(ii) une polyoxyalkylène-amine dont la fonctionnalité amine est inférieure à 3, en quantité de 5 à 30% en poids par rapport au poids total des réactifs, le rapport équivalents NCO/équivalents NH₂ étant supérieur à 1;
(iii) un catalyseur à base de métal alcalin ou de métal alcalino-terreux;
dans lequel:
(a) le polyisocyanate renfermant des groupes isocyanate bloqués, l'omega-lactame et la polyoxyéthylène-amine sont mélangés et fondus à une température maximum de 110°C et, au mélange obtenu, est ajouté le catalyseur métallique dans de l'omega-lactame fondu, ce après quoi on élève la température de polymérisation au moins à 120°C; ou
(b) au polyisocyanate renfermant les groupes polyisocyanates bloqués qui est dissous dans l'omega-lactame fondu, on ajoute un mélange de polyoxyalkylène-amine avec l'omega-lactame fondu et le catalyseur métallique, à une température maximum de 110°C, ce après quoi on élève la température de polymérisation au moins à 120°C.

2. Procédé selon la revendication 1, dans lequel en ce que la température de mélange est comprise entre 75 et 100°C et la température de polymérisation est comprise entre 120°C et 250°C.

3. Procédé selon la revendication 1, dans lequel la température de mélange est comprise entre 75 et 100°C et la température de polymérisation est comprise entre 130°C et 160°C.

4. Procédé selon l'une quelconque des revendications 1 à 3, dans lequel ladite polyoxyalkylène-amine est un dérivé dont la fonctionnalité amine est comprise entre 1,5 et 2,9.

5. Procédé selon l'une quelconque des revendications 1 à 4, dans lequel ladite polyoxyalkylène-amine est une polyoxypropylène diamine ou une polyoxytétraméthylène diamine.

6. Procédé selon la revendication 5, dans lequel la polyoxypropylène diamine a un poids moléculaire de 200 à 5000.

7. Procédé selon l'une quelconque des revendications 1 à 6, dans lequel l'omega-lactame choisi parmi gamma-butyrolactame, delta-valérolactame, epsilon-caprolactame, omega-enantholactame, omega-capryllactame, omega-undecanolactame et omega-lauryllactame, pris soit individuellement, soit en mélange.

8. Procédé selon l'une quelconque des revendications 1 à 7, dans lequel le polyisocyanate est un diisocyanate aliphatique et/ou cycloaliphatique et/ou aromatique.

9. Procédé selon la revendication 8, dans lequel le polyisocyanate est un diisocyanate aliphatique ou cycloaliphatique ou est un mélange de diisocyanate aliphatique et d'un diisocyanate aromatique.

10. Procédé selon l'une ou plusieurs des revendications 1 à 9, dans lequel le polyisocyanate est l'hexaméthylène diisocyanate (HDI) et/ou le triméthylhexaméthylène diisocyanate (TMDI).

11. Polyamide pouvant être obtenu par le procédé selon l'une quelconque des revendications 1 à 10.

12. Polyamide selon la revendication 11, ayant un indice de jaunissement tel que déterminé par la norme ASTM D 1925-70 qui n'est pas supérieur à -15.
